Europäisches Patentamt

European Patent Office

Office européen des brevets

(19)

(11) Publication number:

**0 395 225**

**A2**

(12) **EUROPEAN PATENT APPLICATION**

(21) Application number: **90303308.2**

(22) Date of filing: **28.03.90**

(51) Int. Cl.5: **B60T 8/42**

(30) Priority: **24.04.89 US 341986**

(43) Date of publication of application:
**31.10.90 Bulletin 90/44**

(84) Designated Contracting States:
**DE FR GB IT**

(71) Applicant: **GENERAL MOTORS CORPORATION**
**General Motors Building 3044 West Grand**
**Boulevard**
**Detroit Michigan 48202(US)**

(72) Inventor: **Fabris, Alroy G.**
**38498 Thornwood**
**Mt. Clemens, Michigan 48045(US)**
Inventor: **Shimanovski, Bruce S.**
**29410 Chatham Court**
**Southfield, Michigan 48076(US)**
Inventor: **Pirrallo, Frank G.**
**5136 Renshaw**
**Troy, Michigan 48098(US)**
Inventor: **Shrivastava, Prakash C.**
**4414 Holly**
**Troy, Michigan 48098(US)**
Inventor: **Umasankar, Guruswamy**
**38113 Afton Drive**
**Sterling Heights, Michigan 48310(US)**

(74) Representative: **Denton, Michael John et al**
**Patent Section Vauxhall Motors Limited 1st**
**Floor Gideon House 26 Chapel Street**
**Luton Bedfordshire LU1 2SE(GB)**

(54) **Pressure modulator for anti-lock braking systems.**

(57) An anti-lock braking system (ABS) pressure modulator (7) is provided. The modulator (7) includes a housing (90) with a central bore (92) fluidly exposed to a solenoid valve (20) and to a vehicle brake cylinder (72). A piston (30) is slidably mounted within the central bore and has a contact surface (32). A power means (50) is actuated by a controller (60). A cam (40) moved by the power means (50), has a ramp surface (42) in contact with the piston contact surface (32). The position of the piston (30) within the central bore (92) is determined by the position of the cam (40).

FIG.1

**EP 0 395 225 A2**

## PRESSURE MODULATOR FOR ANTI-LOCK BRAKING SYSTEMS

The field of the present invention is that of a pressure modulators for an anti-lock braking systems (ABS).

Anti-lock braking systems typically, in operation, automatically control the pressure of the brake fluid supplied to a wheel brake to prevent the brake from locking up or the wheel skidding on the road, thereby maximizing the stopping capabilities of a vehicle, while allowing maximum manoeuverability of the vehicle. Most anti-lock braking systems have a wheel speed sensor which provides an input to a computer or controller. The controller supplies a signal to an isolation valve which cuts off the master cylinder from the brake cylinder when ABS operation is required. A pressure modulator of some type then takes over, and in response to the signals given by the ABS controller, applies, holds or decreases the pressure supplied to the brake. Anti-lock braking system pressure modulators are shown and described in US Patent Nos. 4,653,815 and 4,756,391. The present invention provides an anti-lock braking system pressure modulator which provides an alternative to the aforementioned patents.

A braking system in which the pressure is pulsed is shown in US Patent No. 2,270,586. This arrangement makes use of a piston driven by an eccentric cam.

An ABS pressure modulator in accordance with the present invention is characterised by the features specified in the characterising portion of Claim 1.

The present invention provides a cam actuated anti-lock braking system modulator apparatus and method of utilization thereof. In a preferred embodiment, a cam allows the ABS pressure modulator to have a variable relationship between the torque of the motor and the pressure output. The cam profile minimizes the motor torque required to reach a desired brake pressure and also substantially monotonically increases the torque with rotation from bottom to top dead centre positions. Additionally, the cam is configured in such a manner that there is a stop member to set the position of the piston in its bottom dead centre location. The cam is also configured so that at the top dead centre position the piston exerts a force which goes through the pivotal axis of the cam, thereby preventing the piston from being back driven when the motor is cut off.

It is an object of the present invention to provide an improved ABS pressure modulator.

It is an object of the present invention to provide a check valve for an ABS pressure modulator.

The present invention will now be described, by way of example, with reference to the accompanying drawings, in which:-

Figure 1 is a sectional view shown partially in side elevation of a preferred embodiment ABS pressure modulator according to the present invention;

Figures 2-4 are sectional views taken generally perpendicular to the view illustrated in Figure 1 illustrating the operation of the ABS pressure modulator illustrated in Figure 1;

Figures 5 and 6 are sectional cutoff views illustrating a check valve used in a second embodiment of ABS pressure modulator in accordance with the present invention;

Figure 7 illustrates the relationship between piston travel and angular rotation of the cam;

Figure 8 illustrates the profile of the cam; and

Figure 9 illustrates the relationship between brake system pressure and displacement volume of the piston;

Figure 10 illustrates the relationship between rotation of the cam and pressure;

Figure 11 illustrates a third embodiment of the present invention;

Figure 12 illustrates the relationship between rotation of the cam and "X" displacement of the cam with the piston contact surface.

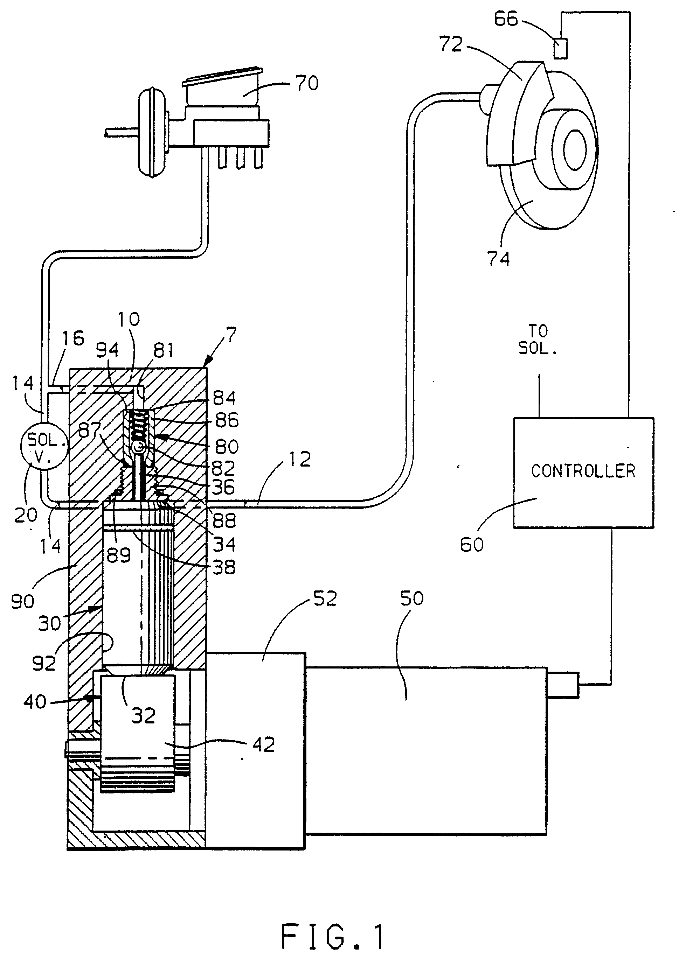

As illustrated in Figure 1 an ABS pressure modulator 7 in accordance with the present invention has a housing 90 with a central bore 92. The ABS pressure modulator 7 has a fluid connection 16 with a master cylinder 70. The ABS pressure modulator 7 also has a fluid connection 12 with a brake cylinder (or caliper) 72. An (internally mounted) solenoid valve 20 is connected via a branch 14 with the central bore 92. If desired, solenoid valve 20 can be mounted externally to the housing 90. A controller 60 which is electronically operable, regulates the operation of the solenoid valve 20.

The central bore 92 is fluidly exposed to the fluid connection 16 via a check valve 80 and by the solenoid valve 20 via the branch 14. In a similar manner the central bore 92 is fluidly exposed to the brake cylinder 72 via fluid connection 12. Mounted within the central bore 92 is a sliding piston 30 which has a longitudinal axis, and which is slidable in the direction of this axis. The piston 30 has a stem 36 projecting from a head 34. Closely adjacent to the piston head 34 is an annular groove 38 for an O-ring seal.

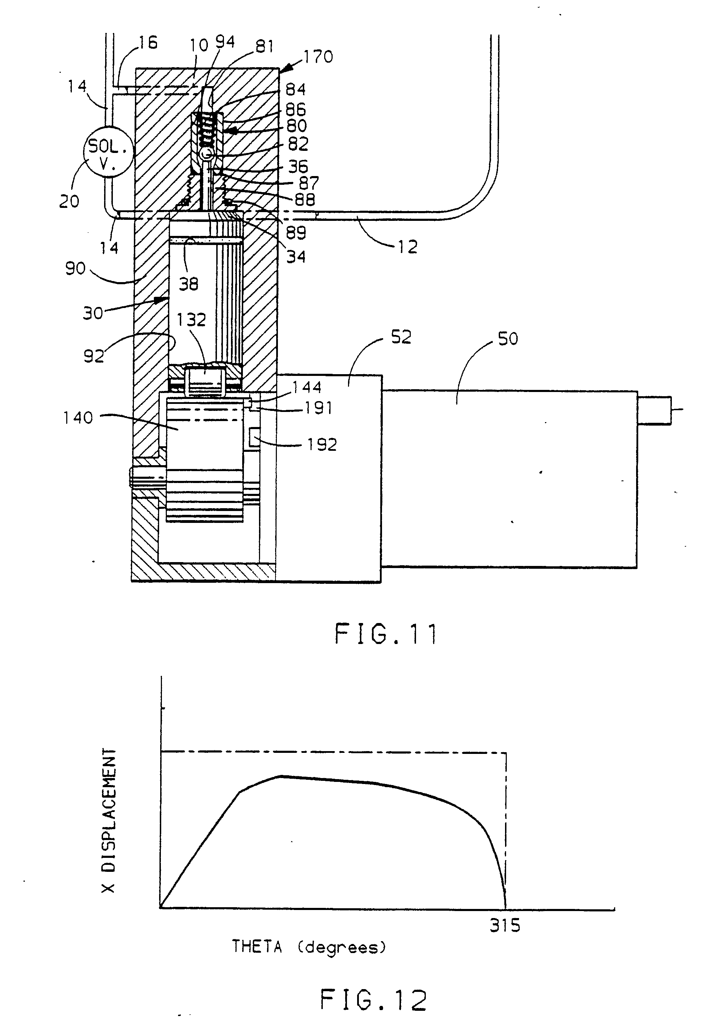

The piston 30 is usually fabricated from a material compatible with the (aluminium) housing 90 and has a hardened contact surface 32. In an alternative embodiment (Figure 11) the contact surface 32 is a roller 132 rotatively mounted on the piston 30.

The check valve 80 has an orifice 81 connected with a fluid connection 10. A spring 84 biases a check ball 82 downward towards the piston 30. The spring 84 and the check ball 82 are mounted within an insert 86 which also has an internally tapered bore which forms a valve seat for the check ball 82.

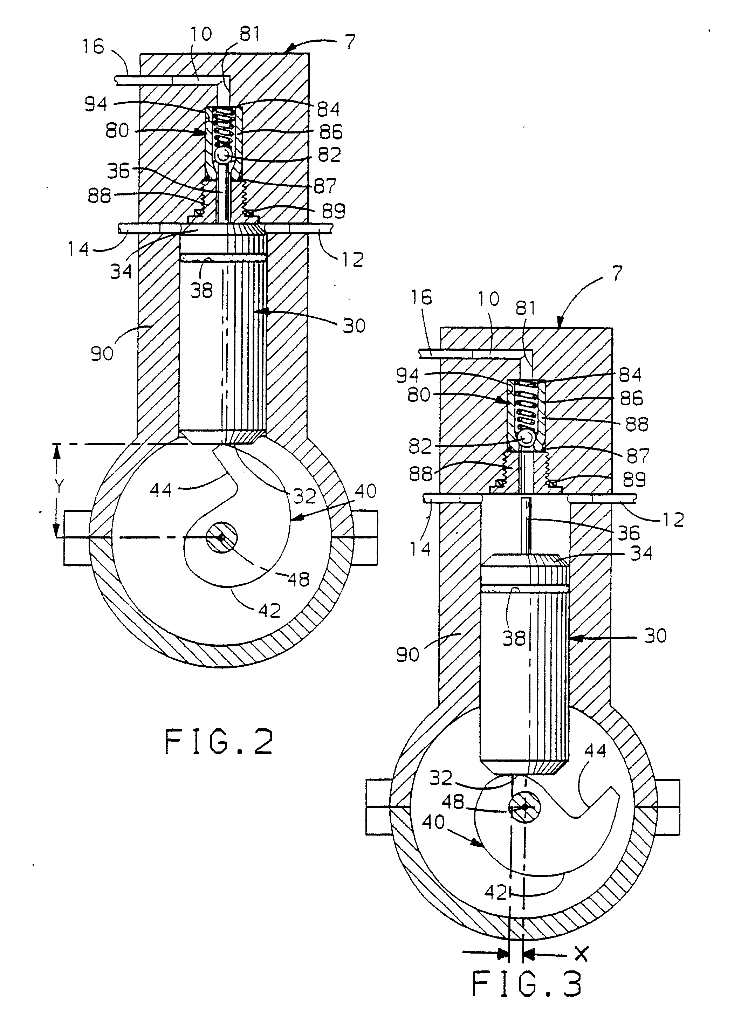

The insert 86 is held within a bore 94 in the housing 90 by a threaded hollow plug 88. An O-ring 87, (Figure 2) surrounding insert 86, and an O-ring 89, seal the check valve 80 against leakage.

A check valve opening means is provided by the stem 36 connected with the piston 30. When the piston 30 is at a second predetermined extreme position with the head 34 in contact with or closely adjacent to the hollow plug 88, the stem 36 will contact and unseat the check ball 82 allowing flow from the master cylinder 70 to the brake cylinder 72 and vice versa.

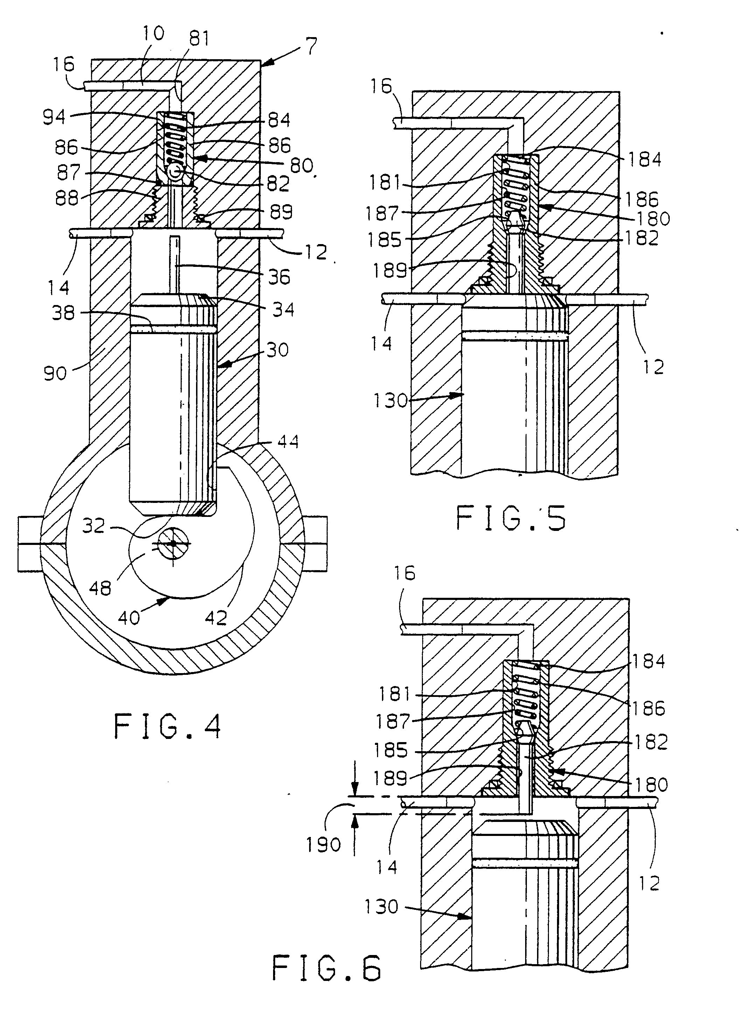

To determine the position of the piston 30 within the central bore 92 there is provided a cam 40 which is rotatable, and which is non-symmetrical. The cam 40 has a ramp surface 42 and a stop surface 44 (stop means). At the top dead centre position shown in Figure 2 the head 34 contacts the hollow plug 88. The head 34 (or hollow plug 88) has a transverse surface groove (not shown) to allow flow past the check valve 80 to the brake cylinder 72 when the braking system is in the normal mode of operation. At the bottom dead centre position shown in Figure 4, the stop surface 44 engages the piston 30, and the piston is in its first predetermined extreme position.

The cam 40 is rotatably moved by a reversible motor 50 (power means) via gear box 52 about a rotation axis 48. The rotation axis 48 of the cam 40 is aligned with the longitudinal axis of the piston 30. The gear box 52 has an approximate ratio of 60 motor:1 rotation cam. The reversible motor 50 (usually D.C.) is controlled by the controller 60.

In the normal mode of operation or normal braking, the brake fluid pressure at the master cylinder 70 causes the brake cylinder 72 to actuate and apply a braking force to a rotor 74 (connected to a vehicle wheel), through the normally open solenoid valve 20 as well as through the check valve 80 which is held open by the stem 36 which is attached to the top of the piston 30.

The piston 30 is held in the second predetermined extreme position, positioned at the top dead centre against the pressure force of the fluid in the brake system without any power being supplied to the reversible motor 50. The cam profile near the top dead centre is such that the line of action of the piston force on the cam 40, caused by the brake pressure acting on the piston 30, passes through the rotation axis 48 of the cam 40. Therefore, there is no resultant torque on the cam 40. Therefore, no holding torque is required, thus the reversible motor 50 does not need an electromagnetic or other type of brake when the ABS pressure modulator 7 is in the normal braking mode.

A sensor 66 determines wheel speed and informs the controller 60. Controller 60 by a method explained in US Patent No. 4,673,225, or by another method when appropriate, will commence an ABS mode of operation. The ABS mode of operation is initiated when a wheel lock condition is detected by the (wheel speed) sensor 66.

The ABS mode of operation starts with a "dump" cycle. The (normally open) solenoid valve 20 is closed. The reversible motor 50 is actuated causing the cam 40 to turn and the piston 30 to retract. The retractive motion of piston 30 causes the check valve 80 to shut off and isolates the brake cylinder 72 from the master cylinder 70.

The reversible motor 50 continues to rotate moving the piston 30 down. The brake fluid pressure in the brake cylinder 72 and the braking force drop steadily. The controller 60 detects the end of wheel lock condition using the (wheel speed) sensor 66 and reverses the direction of the reversible motor 50.

Now the "apply" cycle starts. The piston 30 starts to move up increasing the brake fluid pressure in the brake cylinder 72 and the braking force until wheel lock is detected again. The controller 60 stores the value of the motor current at which this wheel lock happened and initiates the "dump" cycle.

The reversible motor 50 is reversed and the "dump" cycle starts again. The "dump" cycle ends at the end of the wheel lock condition and then a new "apply" cycle starts.

During the "apply" cycle the current of the reversible motor is limited by the controller 60 to the previously stored value unless a wheel lock condition is detected earlier. If no wheel lock occurs at the previously stored motor current value, the current is increased in steps by the controller 60 until wheel lock happens again. The controller 60 stores this new value of the motor current and initiates the next "dump" cycle.

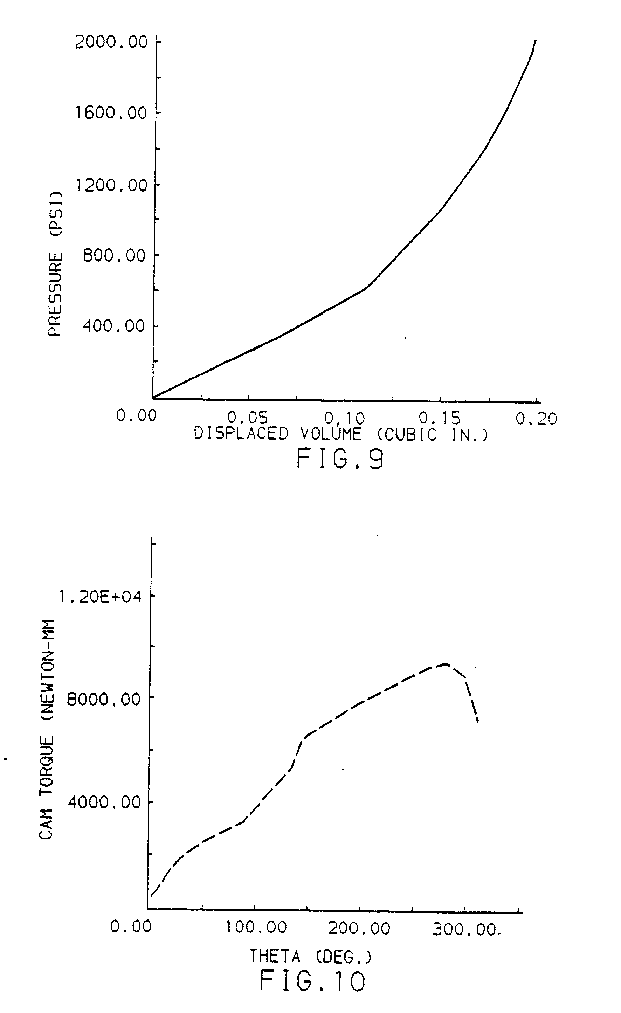

The controller 60 uses the (wheel speed) sensor 66 and reversible motor 50 current as inputs to control the brake pressure. The relationship between the reversible motor 50 current and the brake pressure is therefore a critical characteristic of the ABS pressure modulator 7. The cam 40 shown is designed to closely match the control algorithm in US Patent No. 4,673,225 and the pressure vs. volume profile (see Figure 9) of the brake caliper for optimal performance of the ABS.

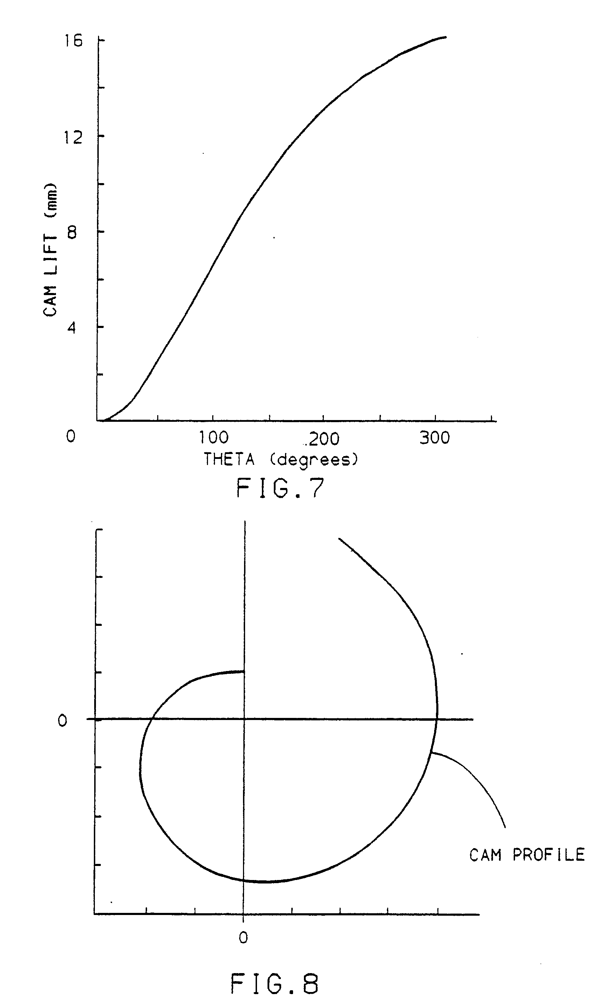

The profile (Figure 8) of the ramp surface 42 of the cam 40 is such that the lift (Figure 7) of the cam follower (piston 30) is aggressive in the initial stages of the profile (at a first predetermined position near the BDC of the piston). The profile becomes less aggressive in the later stages of the profile (near the TDC of the piston) and progressing toward a "zero-lift" condition at the TDC. BDC is bottom dead centre, and TDC is top dead centre. The "X" displacement (Figure 3 and 12) will be at zero at this point. X is the displacement of the point of contact between the piston 30 and the cam 40 from the longitudinal axis of the piston. The above presents the following critical features over previous linear action ABS pressure modulators. (1) Better pressure "apply" and "dump" performance at lower brake pressures due to a high rise initial profile (low mechanical ratio). There is also higher sensitivity to brake pressure in this region of the profile which makes the braking system more controllable at lower pressures; (2) Lower torque requirements at higher brake pressures due to less aggressive profile near the TDC of the piston 30; (3) No torque on the cam 40 under normal braking conditions when ABS is not used due to the "zero-lift" profile at the TDC of the piston 30. Therefore, a brake (typically an electro-magnetic) will not be required to hold the cam 40 at the TDC position. Alternatively any brake could be smaller than previously required.

Additionally when the piston 30 is at BDC (Figure 4) stop surface 44 of the cam 40 provide a stop, causing the piston 30 to prevent any further reverse travel of the cam by causing a torque spike in the reversible motor 50. The torque spike is sensed and utilized by the controller 60 to indicate that the piston 30 is at BDC.

The cam 40 comes up against positive stops against the piston 30 at either end of the piston travel. There is no chance of any wedging of the piston 30 within the central bore 92. Spring packs within the central bore 92 to prevent possible wedging of the piston 30 are eliminated. The ramp surface 42 profile offers the opportunity to vary the mechanical ratio over different ranges of the stroke. The profile is designed such that it provides a low mechanical ratio at the lower ranges of the piston stroke where the brake pressures are lower and a high mechanical ratio at the upper ranges of the piston stroke where the brake pressures are higher. The present cam profile offers several advantages. There is better performance (higher pressure/sec "dump" and "apply" rates) due to higher piston 30 speeds at low brake pressures; that is, better brake apply and dump rates when braking on low friction surfaces (icy and wet pavements) where the ABS will be used the most. There are relatively low peak torque requirements to actuate the piston 30 due to the high mechanical ratio at higher brake pressures. The above results in lower peak current draw on the electrical circuit and lower cost of power electronics. Alternatively the advantage can be expressed that by matching the ramp surface profile 42 to the pressure volume characteristics of the brake cylinder 72, the torque of the reversible motor 50 for a given pressure output is minimized.

The relationship between the brake pressure and the motor torque (current) is nonlinear by virtue of the cam profile design. The motor current is more sensitive to brake pressure at lower ranges of the piston stroke (lower pressures) and is less sensitive to the brake pressure at higher ranges of the piston stroke (higher pressures). This characteristic better matches the control algorithm (US Patent No. 4,673,225) and provides optimum system performance.

The cam 40 is profiled in such a manner that the torque required from the reversible motor 50 to rotate the cam 40 from BDC to TDC is monotonically increasing (Figure 10) substantially all of the stroke of the cam 40 from BDC to TDC. As best shown in Figure 10, the torque rises from approximately $0°$ (BDC) to a peak torque at approximately $280°$ in a total rotation of approximately $315°$. The cam profile can be made in such a manner to maximize the travel of the piston (30) to decrease the volume of the braking system in light of the pressure versus volume curve of the particular brake system. The pressure versus volume relationship will be dependent upon the brake lines and the brake cylinder (72). Therefore, during the initial stages of the cam's (40) rotation, the travel of the piston (30) will be maximized; and, at the later stages of the cam's rotation, the travel of the piston versus time will be minimized, therefore matching the pressure volume characteristics of the braking system.

The ABS pressure modulator 7 design is modular. Each module is put together as a sub-assembly (for example, geared motor, housing) and then the sub-assemblies are assembled together. Thus, the manufacturing and assembly processes are simpler.

Referring to Figure 11, an alternate embodiment of ABS pressure modulator 170 has a roller 132 contact surface on the end of the piston 30. The cam 140 has a lateral projecting boss stop 144 which makes contact at TDC and BDC with stops 191, 192 on the housing 90. This form of stop for the cam 140 could alternatively be used in the embodiment described in Figures 1 to 4, instead of the cam engaging the piston.

Referring to Figures 5 and 6, an alternative check valve 180 is provided. The previous hollow plug 88 and insert 86 combined into a one-piece insert 186. The stem 36 is removed from the piston 30 and is combined with the check ball 82 into a valve member 182 having a head and a stem. The O-ring 87 is eliminated. The new check valve 180 besides being simple is easier to fabricate. The distance of the check ball 82 from the piston 30 at TDC is no longer critical. The overall length of the hollow plug 88 and also of its shoulder and the depth relation of the multiple bores that insert 86 and hollow plug 88 fit within are no longer as critical. Additionally, the length of stem 36 is no longer critical. The major, if not sole, critical detailed dimension left is the length that valve member 182 protrudes from the bottom of the check valve 180. This dimension will determine the dump response time and can be modified for the desired application.

The insert 186 has a central bore 181. The central bore 181 has a conical valve seat and orifice 185 engageable by the head of the valve member 182. Valve seat and orifice 185 divides the insert central bore 181 into an upper portion 187 and a lower portion 189. A spring 184 acts on valve member 182 to bias it towards the piston 130. Contact of the piston 130 with the stem valve member 182 will occur in the positional range 190 to allow fluid communication between the master cylinder 70 and the brake cylinder 72.

It will be apparent to those skilled in the art that non cam actuated ABS pressure modulators can also utilize the inventive check valve 180.

**Claims**

1. An anti-lock braking system (ABS) pressure modulator (7) fluidly connectable to a brake cylinder (72) and to a master cylinder (70) via a solenoid valve (20), and being responsive to a controller (60), the ABS pressure modulator comprising a housing (90) having a central bore (92) fluidly exposable to the solenoid valve and the brake cylinder; a piston (30) slidably mounted within the central bore, slidable in the direction of its longitudinal axis, and having a contact surface (32), the piston having first and second predetermined extreme positions within the central bore which are opposed to one another; a check valve (80) which when open allows direct fluid communication between the master cylinder and the central bore; check valve opening means (36) actuable by the piston for fully opening the check valve when the piston is the second predetermined extreme position; power means (50); a cam (40) rotatable by the power means about an axis (48) and having a ramp surface (42) in contact with the contact surface of the piston, the position of the piston within the housing being determined by the position of the cam, the axis (48) of rotation of the cam being aligned with the longitudinal axis of the piston;

characterised in that the power means (50) is reversible and actuatable by the controller (60) to move the piston (30) between the first and second predetermined extreme positions; and in that the cam (40) has stop means (44,144) whereby the stop means determines the first predetermined extreme position of the piston within the central bore.

2. An ABS pressure modulator as claimed in Claim 1, wherein at the first predetermined extreme position of the piston (30), the power means (50) generates a signal which is detectable by the controller (60) for indicating to the controller the position of the piston.

3. An ABS pressure modulator as claimed in Claim 1 or Claim 2, wherein the ramp surface (42) of the cam (40) has a profile such that in the first and second predetermined extreme positions of the piston (30) the point of contact between the piston and the cam is aligned with the longitudinal axis of the piston, and such that between the first and second predetermined extreme positions, the point of contact is offset from the longitudinal axis by a predetermined displacement (X) dependent on the position of the piston.

4. An ABS pressure modulator as claimed in any one of claims 1 to 3, wherein the contact surface of the piston (30) is defined by a roller (132).

5. An ABS pressure modulator as claimed in any one of claims 1 to 4, wherein the ramp surface (42) of the cam (40) is profiled to monotonically increase the required torque of the power means (50) with rotation of the cam whilst moving the piston (30) from the first to second predetermined extreme position.

6. An ABS pressure modulator as claimed in any one of claims 1 to 5, wherein the ramp surface (42) of the cam (40) is profiled to minimize the torque required by the power means (50) to rotate the cam for the ABS pressure modulator to reach a desired braking system pressure.

7. An ABS pressure modulator as claimed in any one of claims 1 to 6, wherein the check valve comprises a check ball (82) which is biased by a spring (84) towards a valve seat and towards the piston (30), and wherein the check valve opening means comprises a stem (36) integral with the piston (30).

8. An ABS pressure modulator as claimed in any one of Claims 1 to 6, wherein the check valve (180) and the check valve opening means are integral and defines a valve member (182) having a head and a stem, the valve member being biased by a spring (184) towards the piston (130) to bias the head towards a valve seat (185), the stem being engageable by the piston to open the check valve.

9. An ABS pressure modulator as claimed in Claim 7 or Claim 8, wherein the valve seat is defined by an insert (86, 186) having a tapered bore, the insert being positioned in a bore (94) in the housing (90) which is connected with, and aligned with, the central bore (92).

10. An ABS pressure modulator as claimed in any one of Claims 1 to 9, wherein the stop means is defined by a stop surface (44) on the cam (40) which is engageable with the piston (30).

11. An ABS pressure modulator as claimed in any one of Claims 1 to 9, wherein the stop means is defined by a boss stop (144) which laterally projects from the cam (140) and which is engageable with stops (191, 192) on the housing (90).

12. A check valve (180) for an ABS pressure modulator (7) having a reciprocating piston (130), for allowing fluid communication between a master cylinder (70) and a brake cylinder (72) when the piston is in a predetermined positional range, the check valve comprising a cylindrical insert (186), having a central bore (181) and being sealably mounted in a bore (94) in the ABS pressure modulator, the central bore having a conical valve seat and orifice (185) dividing the central bore into first (187) and second (189) portions; a spring (184) captured within the first portion of the central bore; and a valve member (182) biased toward the valve seat by the spring for sealing the orifice, the valve member having a stem extending through the second portion central bore beyond the insert, whereby the valve member is held away from the valve seat when the piston is in a predetermined positional range allowing the master cylinder to be fluidly connected with the brake cylinder.

FIG.1

FIG.2

FIG.3

FIG.4

FIG.5

FIG.6

FIG.7

CAM PROFILE

FIG.8

FIG.9

FIG.10

FIG.11

FIG.12